# EUROPEAN PATENT SPECIFICATION

(11) **EP 1 272 042 B1**
(45) Date of publication and mention of the grant of the patent: **21.01.2009**
(21) Application number: 00960223.6
(22) Date of filing: 04.09.2000
(51) Int. Cl.: A23B 7/154, A23B 9/26, A23L 3/3544, A01N 3/02

(54) **FRUIT AND VEGETABLE PRESERVATIVE**
KONSERVIERUNGSMITTEL FUER OBST UND GEMUESE
CONSERVATEUR DE FRUITS ET LEGUMES

(30) Priority: 03.03.2000 AU PQ598300
(43) Date of publication of application: 08.01.2003
(73) Proprietor: Citrus Sensation Pty Ltd., Barham, NSW 2732 (AU)
(72) Inventor: SELLECK, Rhonda, Barham, NSW 2732 (AU)
(74) Representative: Gillam, Francis Cyril
(86) International application number: PCT/AU2000/001041
(87) International publication number: WO 2001/064041

(56) References cited:
- EP-A- 0 402 049
- EP-A- 0 420 376
- EP-A- 1 086 693
- WO-A-97/32947
- DE-A1- 19 917 836
- DATABASE WPI Section Ch, Week 200007 Derwent Publications Ltd., London, GB; Class B03, AN 1992-157315 XP002390359 & JP 02 997303 B2 (SAN-EI CHEM IND LTD) 11 January 2000 (2000-01-11)
- DATABASE WPI Section Ch, Week 199616 Derwent Publications Ltd., London, GB; Class C04, AN 1996-156952 XP002390360 & JP 08 040803 A (NAKANO M) 13 February 1996 (1996-02-13)
- DATABASE WPI Section Ch, Week 199427 Derwent Publications Ltd., London, GB; Class D13, AN 1994-220459 XP002390361 & JP 06 153884 A (SP SEIYAKU KK) 3 June 1994 (1994-06-03)
- DATABASE WPI Week 200005, Derwent Publications Ltd., London, GB; AN 2000-056721, XP002311260 & JP 11 299 452 A (HAYASHIBARA SEIBUTSU KAGAKU) 02 November 1999
- DATABASE WPI Week 199942, Derwent Publications Ltd., London, GB; AN 1999-496384, XP002999796 & JP 2 938 009 B (FOODIUM TOKUNAGA YG) 23 August 1999
- DATABASE WPI Week 199927, Derwent Publications Ltd., London, GB; AN 1999-324045, XP002999797 & JP 11 117 193 A (OJI TAKKU HANBAI KK) 27 April 1999
- DATABASE WPI Week 199646, Derwent Publications Ltd., London, GB; AN 1996-459073, XP002999798 & JP 8 228 685 A (KIKKOMAN CORP) 10 September 1996
- DATABASE WPI Week 199141, Derwent Publications Ltd., London, GB; AN 1991-300280, XP002149838 & JP 3 200 781 A (KIKKOMAN CORP) 02 September 1991
- DATABASE WPI Week 198610, Derwent Publications Ltd., London, GB; AN 1986-065473, XP002999799 & JP 61 016 982 A (KIKKOMAN CORP) 24 January 1986

## Description

### Field of the Invention

This invention relates to the preservative solutions which enable peeled fruit and prepared vegetables, peeled or chopped as for cooking or raw consumption to be marketed and stored without unacceptable deterioration.

### Background of the Invention

Citrus fruits, such as oranges, mandarins and grapefruit, deteriorate rapidly once peeled due to oxidation of the fruit and other effects. Such rapid spoiling has prevented the marketing of peeled citrus fruits, and in view of the known difficulties associated with the peeling of such fruits, has restricted the consumption and sale of such fruits. Other fruits, such as apples, are equally susceptible to spoiling when peeled or exposed to the atmosphere in the raw state. Vegetables, nuts and shoots are similarly susceptible to spoiling, as are fruit and vegetable juices and cut flowers.

Nature has demonstrated that vitamin C is never found alone in nature; it is always found in combination with flavonoids. Flavonoids were first located in the white pith of oranges. The inclusion of vitamin C and/or ascorbates (calcium, magnesium, sodium or potassium ascorbates) in nature in combination with flavonoids results in natural preservation of the fruit or vegetable.

Anti-browing agents comprising ascorbic acid and flavoroid are known from JP2997303-B2.

### Summary of Invention and Object

It is an object of the present invention to provide for the preservation of peeled fruits and vegetables, peeled or chopped as for cooking or raw consumption, peeled and cut fruits, fruit salad, including oranges, mandarins, grapefruit, apples, kiwi fruit, guavas, lychees, rumbutans, apricots, peaches, nectarines, pineapple, melon, strawberries, cherries, passionfruit, mangostein, mango, asparagus, broccoli, avocado, cauliflower, beans (whole or chopped), peas (including shelled peas and snowpeas), celery, carrot (chopped, shredded or in straws), capsicum, chocos, zucchini, corn, brussel sprouts, cabbage, pumpkin, garlic, chilli and ginger, (hereinafter "peeled fruits, peeled or cut vegetables"), in a manner which enables the peeled fruits, peeled or cut vegetables to be suitably packaged and stored for subsequent consumption without unacceptable deterioration.

This object is realised by including in the solution an effective amount of an antioxidant containing flavonoids, and additionally alpha lipic acid.

The invention further provides a preservative solution for peeled fruits, peeled or cut vegetables (as hereinbefore defined) which includes at least one antioxidant containing flavonoids, and alpha lipoic acid.

The antioxidant component can be selected from a natural oil-containing material, such as grapeseed oil and/or any extract from the bark of pinus, such as Pinus Radiata, Pinus Pinasta (Maritime Pine), or from the other flavonoid containing antioxidants described below. Such antioxidants contain substantial amounts of flavonoids and are readily commercially available. Examples of pinus bark extracts include Enzogenol™ (see "Why Enzogenol is an Antioxidant Breakthrough" by Kelvin Duncan dated 1998 in "The Enzogenol Story), or Pycnogenol™, an extract from Maritime Pine (Pinus Pinasta) (see "Pycnogenol The Super Protector Nutrient" Richard A Passwater and Chithan Kandaswami). The grapeseed oil component referred to above can be replaced by a powdered grapeseed extract which is dissolved in the solution.

Other acceptable flavonoid containing antioxidants include Acerola, Rutin, Hesperidin (Vitamin P), Alpha Lipoic Acid, Quercetin, Blueberry Powder, Bioperin, Lectein, Xanthophyll (marigold essence), Lycopene (tomato extract), Methylsulfonylemethan (MSM), Boswellia Serrata, Schizandra Chinensis, Citrin, Flavones, Calechin, Flavoals. Citrus Seed Extract, Rhodiola Rosea, Juniper Berry Powder Extract, Astraeaus Membranaceus Extract, Echinacea Augusifolia Extract, Gold Seal Extract, Cranberry Extract.

The process of the present invention effectively replaces the detrimental results of chopping and peeling by replacing the vitamin C, ascorbates and flavonoids of the peeled or chopped product. In food preparation, there are serious losses in flavonoids, and the replacement of those flavonoids by the preservative solution of the present invention ensures that the product is preserved in an apparently fresh state for a considerable period of time.

Grapes, apples, grapefruit, broccoli, onions and fennel contain the flavonoid Quercetin, and the replacement of this important flavonoid by the use of the preservative solution ensures that the product is preserved in a natural state.

The flavonoid Acerola is found in cherries, and the loss of that flavonoid can be replaced in a peeled or cut version of this fruit by the preservative solution of the invention.

Berries contain the flavonoid Schizandra Chinensis, and such berries will also respond well to the replacement of that particular flavonoid by means of the preservative solution of the present invention.

Due to the fact that flavonoids increase the absorption of vitamin C, many flavonoids are found to be effective across the whole spectrum of fruit (deciduous or tropical) and vegetables. Hesperidin, the bio-flavonoid sometimes called vitamin P includes Quercetin, Citrin, Rutin, Flavones, Calechin and Flavonals. The versatility of this bio-flavonoid is apparent together with the following bio-flavonoids.
1) Tomato (Lycopene), and
2) Marigold (xanthophyll), or any one or more of the flavonoid containing antioxidants defined above.

These particular bio-flavonoids will be referred to below in relation to the preservation of fruits, vegetables and cut flowers.

The interchangeability of vitamin C and ascorbates are tolerated favourably by all products as defined above, and the particular interchangeability of flavonoids with any fruit or vegetable is particularly apparent. In nature, there are over four thousand types of flavonoids in the form of water soluble compounds, and it is therefore possible to use mixes of flavonoids and vitamin C or ascorbic acids in the preservative solution of the present invention. By suitably selecting the most appropriate flavonoids, vitamin C or ascorbic acids, the taste of the preserved product is always fresh and the flesh of the product firm.

If desired, zinc can be combined with vitamin C or ascorbate as it enhances its function. For example, zinc gluconate can be added to water with lemon juice to preserve vegetables such as potatoes and fruits such as apples and pears. Beta Carotene can also be added to vegetables in the presence of vitamin C or ascorbates. Beta Carotene is the water soluble form of vitamin A. Similarly, d-α-tocopherol may be added when vitamin C or ascorbates are present in the preservative solution. This compound is natural vitamin E which is an antioxidant which functions well together with Beta Carotene and zinc to inhibit degeneration of the fruit, vegetable or fruit juice.

In the specific examples described below, it will be noted that products being preserved are dipped or soaked for a short interval in the preservative solution, and it has been found that the solution is absorbed only into the surface of the product rather than absorbed deeply into the flesh of the product. Nevertheless, acceptable preservation is still achieved.

Fruit salad having the preservative solution as its juice, achieved remarkable longevity, even when apple is included.

In applying the preservative solution to the products defined above, it is preferred to dry some products after the preserving solution is applied. By drying the treated product, it is found that the preserving solution is more successful.

In one preferred form of the invention, a preservative solution for peeled fruit or vegetables include about 40% to 60% by weight of pineapple juice, about 40% to 60% by weight of sugar, and about 0.04% to 0.06% by volume of grapeseed oil and/or Enzogenol or Pycnogenol e.g. (proanthocyanidin powder).

In preparing the above defined solution, the pineapple juice and sugar components are preferably boiled for a period of about three minutes and allowed to cool before adding the grapeseed oil and/or Enzogenol, proanthocyanidin, Pycnogenol or any other suitable proanthocyanidin powder to preserve the antioxidant properties of the oil.

The invention further provides a preservative solution including a boiled or substantially sterile water and sugar solution, an anti-browning component selected from lemon juice, citric acid or ascorbic acid, and an anti-oxidant component including at least one antioxidant containing flavonoids.

Suitably sterile water can be produced by adding about 4 drops of colloidal silver to I litre of water. Colloidal silver has a sanitising effect acceptable under the N.H.M.R.C and U.S.E.P.A. water quality guidelines.

The antioxidant can be selected from a natural oil coating material, such as grapeseed oil, an extract from the bark of pinus such as Pinus Radiata or an extract from the bark of pinus pinaster, or Pinus Maritime, such as the antioxidant products described above.

The amount of sugar contained in the solution depends on the fruit or vegetable being preserved and may vary from about 2% by weight to about 40% by weight.

The invention further provides a process for preserving peeled fruits, raw vegetables including the steps of peeling the fruit or preparing the vegetable, removing the central pith material from the fruit if necessary, soaking the fruit or vegetable in the solution as defined above, or adding the solution to the juice, and suitably packaging the preserved fruit or vegetable. Citrus fruits are preferable soaked whole, although they can be cut or segmented. Vegetables are at least peeled and can be cut as for usual preparation for cooking or eating.

If desired, the fruit or vegetable can be preserved by the process in cut or segmented pieces.

In packaging the fruit, vegetables, it is preferred to package in the presence of a suitable known food gas, such as those containing nitrogen and carbon dioxide gases. Once packaged the produce is refrigerated at a constant of between 0°C and 6°C.

In the preservation of grapefruit, a quantity of up to about 50% of the pineapple juice may be replaced by grapefruit juice, while the sugar content is preferably provided by raw sugar rather than processed sugar. Otherwise, the preserving solution is the same as for oranges.

If desired, the solution may include an appropriate quantity of rose pink colouring, such as food colour 122.

As mentioned above, the natural oil coating component, such as grapeseed oil, may be replaced or supplemented by extracts from the bark of Pinus Radiata or pinus pinaster. This latter material is described in greater detail in United States Patent No. 4,698,360.

These alternative or supplementary substances are used because they protect the fruit, vegetables from oxidative damage. Enzogenol has a wide mixture of flavonoids from every flavonoid group, the natural defence mechanism of many plants, which protect against fungal parasites, herbivores, pathogens and oxidative cell injury and environmental stress. Flavonoids contribute to the colour, nutritional value, texture and taste of fruit, vegetables, nuts and shoots, and to their keeping qualities.

Pycnogenol has built into it an enzyme delivery system, and as a medicinal dose, the suggested daily dose is 20mg for every 20 pounds of body weight. As reported by the International Bio-Research Inc, no toxic doses have been found. There are no recommended levels for flavonoid intake for humans, but one has to eat an enormous quantity of fruit and vegetables to obtain reasonable levels for flavonoids from these sources. Because not all fruit and vegetables contain the same flavonoids, or similar proportions of various flavonoids, Enzogenol is excellent because of its extremely wide range of flavonoids and phenolic acids. Flavonoids and phenolic acids are removed during handling, storing, skinning and peeling. The above described extracts are beneficial to the preservative solution according to the invention because they are water soluble and fat soluble. Examples (not in accordance with the invention)

### Apple Formula

1. 400mls spring water (preferably purified with 4 drops colloidal silver to 1 litre water)
2. 20gms sugar boil for 3 minutes then cool
3. 20mg Enzogenol powder or proanthocyanidin powder
4. 60mls lemon juice or 20 mg ascorbic acid.

### Nashi Formula

1. 400mls spring water (preferably purified with 4 drops colloidal silver to 1 litre water)
2. 100gms sugar boil for three minutes then cool
3. 20mg Enzogenol powder or proanthocyanidin powder
4. 15mls lemon juice

### Honey-Dew Melon

1. 400mls spring water
2. 100gms sugar
   boil for three minutes then cool
3. 10mg Enzogenol powder or proanthocyanidin powder
4. 10mls lemon juice

Various fruit or vegetables are applied to either of the formulas or variations. Granny Smith apples are soaked for 10 minutes, softer apples for 8 minutes, nashi are soaked for 3 minutes, pears for 5, melons for 3 minutes.

All the products are drained and packed as above and refrigerated. Apples, pears and nashis are still white and crisp after 3 weeks. Kiwi fruit responds just as well to the apple formula as the orange formula.

After introducing the fruit, vegetables to the relevant formula, all products are of a rich colour, crisp, firm, natural and fresh tasting and smell fresh. Even "tired" broccoli revived and improved after being preserved in the apple formula.

In the above formula:
lemon juice, ascorbic acid and citric acid may be used together or interchangeably;
grapeseed extract which is also a flavonoid rich substance may be used alone or together with the pine bark extract;
all tropical fruit may also be preserved using the solution.

The bio-flavonoids Lycopene and Xanthophyll can be used together in the proportions, Lycopene 3mg and Xanthophyll 2.1 mg per 400ml of preservative solution.

Rose hip fruit powder (rosa canena or rhodiola rosea) is also able to be used.

Bio-flavonoids powder can be used 25mg for each 1. 5 grams of ascorbate or vitamin C in the preservative solution.

Juniper berry powder can be used in the proportion 5mg per 400ml of preservative solution with 2mg of ascorbate.

Grapeseed powder extract can be used instead of grapeseed oil and the proportions 40mg per 400ml of preservative solution, provided that solution contains vitamin C or ascorbate.

Maritime pine bark extract can be used in place of Pinus Radiata bark extract. Similarly, Astragaus membranaceus extract equivalent to dry inner stem bark 60 to 100mg per 1000ml of preservative solution can be used in place of the pinus bark extracts referred to above. Furthermore, echinachea angustifolia extract equivalent to dry root 100mg standardised to contain echinoside 1. 7mg per 1000ml of preservative solution may be used in place of any one of the above.

Alternatively, gold seal (hydrastis canadenis extract) equivalent to dry stem bark 150mg may be used in place of the above.

Similarly cranberry (vaccinium macrocarpon)100mg dry fruit equivalent to 10 grams fresh fruit juice can be added to 400ml of preservative solution.

Similarly, Quercetin, Acerola, Schizandra Chinensis, Hesperidin and Rutin can also be added to the preservative solution to provide flavonoid input to preserve the fruit, vegetable or other product. In addition to Alpha Lipoic Acid, Blueberry Powder, Bioperin, Lectein, Xanthophyll (marigold essence), Lycopene (tomato extract), Methylsulfonylemethan (MSM), and Boswellia Serrata, Citrin, Flavones, Calechin, Flavoals, Citrus Seed Extract, Rhodiola Rosea, Juniper Berry Powder Extract, Astraeaus Membranaceus Extract, Echinacea Augusifolia Extract, Gold Seal Extract, Cranberry Extract.

## Claims

1. A process of extending the useful shelf life of peeled and cut fruits and vegetables which includes the step of dipping or coating the cut or peeled fruits and vegetables with an aqueous solution which contains an antioxidant containing flavonoids, **characterised in that** the solution additionally contains alpha lipoic acid.

2. A process as claimed in claim 1 wherein the flavonoid is selected from the group consisting of acerola, quercitin, hesperidin, rutin and flavonoid rich extracts from pine bark, grape seeds, citrus seeds, cranberries, Juniper berries and rosehips.

3. A process as claimed in claim 1 or claim 2 wherein the flavonoid source is pycnogenol or enzogenol.

4. A process as claimed in any of the preceding claims wherein the antioxidant is selected from the group consisting of ascorbic acid, or alpha lipoic acid.

5. Peeled and cut fruits and vegetables which have been dipped or coated with an aqueous solution which contains an antioxidant containing flavonoids, **characterised in that** the solution additionally contains alpha lipoic acid.

6. A fruit and vegetable preservative composition for use in the process of claim 1, which includes an antioxidant containing flavonoids, and alpha lipoic acid.

## Patentansprüche

1. Verfahren zur Verlängerung der Haltbarkeitsdauer von geschälten und geschnittenen Früchten und Gemüse, bei dem die geschnittenen oder geschälten Früchte und Gemüse in eine wässrige Lösung, die ein Antioxidanz enthält, das Flavonoide enthält, eingetaucht oder mit dieser beschichtet wird, **dadurch gekennzeichnet, dass** die Lösung außerdem α-Liponsäure enthält

2. Verfahren nach Anspruch 1, bei dem das Flavonoid ausgewählt ist aus der Gruppe bestehend aus Acerola, Quercitin, Heaperidin, Rutin und Flavonoid-reichen Extrakten von Kiefernrinde, Traubenkernen, Zitrusgewächskernen, Moosbeeren, Wacholderbeeren und Hagebutten.

3. Verfahren nach Anspruch 1 oder Anspruch 2, bei dem die Flavonoidquelle Pyknogenol oder Enzogenol ist.

4. Verfahren nach einem der vorhergehenden Anspruche, bei dem das Antioxidanz ausgewählt ist aus der Gruppe bestehend aus Ascorbinsäure oder α-Liponsäure.

5. Geschälte und geschnittene Früchte und Gemüse, die in eine wässrige Lösung, die Antioxidanz enthält, das Flavonoide enthält, eingetaucht oder mit dieser beschichtet sind, **dadurch gekennzeichnet, dass** die Lösung außerdem α-Liponsäure enthält.

6. Früchte- und Gemüse-Konservierungsmittelzusammensetzung zur Verwendung bei dem Verfahren gemäß Anspruch 1, die ein Antioxidanz, das Flavonoide enthält, und α-Liponsäure einschließt.

## Revendications

1. Procédé d'extension de la durée de vie d'utilisation de fruits ou de légumes pelés et coupés qui comprend l'étape de trempage ou d'enrobage desdits fruits ou légumes pelés ou coupés dans une solution aqueuse qui contient un antioxydant contenant des flavonoïdes, **caractérisé en ce que** la solution contient de plus l'acide alpha lipoïque.

2. Procédé comme revendiqué dans la revendication 1 dans lequel le flavonoïde est sélectionné dans le groupe consistant en acerola, quercitine, hesperidine, rutine et les extraits riches en flavonoïdes de l'écorce de pin, des pépins de raisin, des pépins de citron, des canneberges, des baies de genièvre et des cynorhodons.

3. Procédé comme revendiqué dans la revendication 1 ou 2 dans lequel la source de flavonoïde est le pycnogénol ou l'enzogénol.

4. Procédé comme revendiqué dans l'une quelconque des revendications précédentes dans lequel l'antioxydant est sélectionné dans le groupe consistant en l'acide ascorbique, ou l'acide alpha lipoïque.

5. Fruits ou légumes pelés et coupés qui ont été trempés ou enrobés par une solution aqueuse qui contient un antioxydant contenant des flavonoïdes, **caractérisés en ce que** la solution contient de plus l'acide alpha lipoïque.

6. Composition stabilisante pour fruit ou légume pour la mise en oeuvre dans le procédé de la revendication 1, qui comprend un antioxydant contenant les flavonoïdes, et l'acide alpha lipoïque.
